# EUROPÄISCHE PATENTSCHRIFT

(11) **EP 1 152 874 B1**
(45) Veröffentlichungstag und Bekanntmachung des Hinweises auf die Patenterteilung: **16.11.2005**
(21) Anmeldenummer: 00934926.7
(22) Anmeldetag: 22.04.2000
(51) Int. Cl.: B27B 19/12, B23D 51/01, B23D 51/02

(54) **HANDGEFÜHRTE LAUBSÄGEMASCHINE MIT PISTOLENARTIGEM, UNTERARMSTÜTZENDEM BASISGEHÄUSE**
HAND-OPERATED SCROLL SAWING MACHINE WITH A PISTOL-TYPE, BASE HOUSING THAT IS SUPPORTED ON THE LOWER ARM
SCIE A CHANTOURNER MANUELLE DOTEE D'UN BOITIER DE BASE DE TYPE PISTOLET S'APPUYANT SUR LES AVANT-BRAS

(30) Priorität: 05.06.1999 DE 19925748
(43) Veröffentlichungstag der Anmeldung: 14.11.2001
(73) Patentinhaber: ROBERT BOSCH GMBH, 70442 Stuttgart (DE)
(72) Erfinder: FRECH, Alfred, 70771 Leinfelden-Echterdingen (DE); LUTZ, Tobias, 70794 Filderstadt (DE); ENGELFRIED, Uwe, 73760 Ostfildern (DE); KEUSCH, Siegfried, 73779 Deizisau (DE)
(86) Internationale Anmeldenummer: PCT/DE2000/001288
(87) Internationale Veröffentlichungsnummer: WO 2000/074905

(56) Entgegenhaltungen:
- DE-U- 8 710 927
- US-A- 2 753 898
- US-A- 5 027 518
- US-A- 5 176 059
- US-A- 5 351 590
- US-A- 5 924 209

## Beschreibung

### Stand der Technik

Die vorliegende Erfindung geht aus von einer handgeführten Laubsägemaschine nach dem Oberbegriff des Anspruchs 1.

Durch die US 5,027,518 ist eine gattungsgemäße Laubsägemaschine bekannt, die im Aufbau einer manuell zu betätigenden Laubsäge gleicht, wobei der typische U-förmige Bügel einen nach unten quer abstehenden Handgriff mit einem Motorgehäuse trägt, wobei die Rückseite des Griffs einen Schalter zur Steuerung der Energieversorgung des Motors trägt.

Gegenüber manuellen Laubsägen hat die bekannte Maschine den Vorteil, daß die Sägebewegung von Hand entfällt.

Vorteile der vorliegenden Erfindung
Die Aufgabe der Erfindung wird durch die Merkmale des unabhängigen Anspruchs 1 gelöst.
Die abhängigen Ansprüche offenbaren weitere Vorteile der Erfindung.
Die erfindungsgemäße Laubsägemaschine mit den Merkmalen des Anspruchs 1 hat den Vorteil, daß sie sehr leicht und handlich ist und besonders sicher kontrollierbar vom Bedienenden zu führen ist.

Die Handhabungssicherheit wird dadurch verbessert, daß das pistolenartige Basisgehäuse an den Handgriff anschließend nach hinten verlängert ist und sich in der Bedienposition am Unterarm des Bedienenden abstützt.

Dadurch, daß die Arme des U-förmigen Bügels um ein Mehrfaches, insbesondere um das Doppelte länger sind als das Laubsägeblatt, können verhältnismäßig großflächige Werkstücke bis in die Mitte mit der Laubsäge bearbeitet werden, d.h. die maximale Schnittiefe in ein brettartiges Werkstück von dessen Rand aus beträgt etwa 270 mm und ist damit verhältnismäßig hoch.

Dadurch, daß der Handgriff die Schalttaste des Ein- und Ausschalters des Motors vorn zwischen Nasen trägt, ist diese Schalttaste gut, insbesondere mit dem Zeigefinger, handhabbar und dabei vor ungewollter Betätigung geschützt.

Dadurch, daß das Basisgehäuse den Motor und Antriebsmittel zum Hin- und Herbewegen des Laubsägeblatts kapselartig aufnimmt, sind diese gegen Staub und Beschädigung gesichert und der Bedienende vor Verletzung durch die Bewegten Teile gesichert. Der gleiche Vorteil ergibt sich dadurch, daß der obere Arm des Bügels an seinem freien Ende ein Endgehäuse trägt, das Spann- und Antriebsmittel zum lösbaren Spannen des Laubsägeblatts aufnimmt.

Dadurch, daß die Laubsäge oben an ihrem Basisgehäuse eine mit parallelen Rillen strukturierte, zum unteren Arm fluchtende ebene Auflagefläche zum Abstützen eines Werkstücks trägt, ist die Laubsäge gegenüber dem Werkstück besonders sicher kontrollierbar und ohne Querverlauf führbar, so daß nahezu ohne Abweichung von mit dem Lineal bzw. dem Zirkel vorgezeichneten Linien gesägt werden kann.

Dadurch, daß das Basisgehäuse der Laubsäge, insbesondere verrastbar, lösbar mit einem z.B. an einer Werkbank befestigbaren Sägetisch koppelbar ist, wobei der Handgriff den Sägetisch nach unten bequem greifbar überragt, kann die Laubsäge mit dem daran befestigten Sägetisch als besonders genau positionierbares Handwerkzeug eingesetzt werden bzw. bei an einer Werkbank angeflanschtem Sägetisch als stationäres Gerät genutzt werden.

Dadurch, daß das Basisgehäuse der Laubsägemaschine über Längsführungen mit dem Sägetisch, insbesondere über unterbrochene Nut- und Federführungen, spielfrei koppelbar ist, kann die Laubsägemaschine von oben in den Sägetisch eingefügt werden und bajonettverschlußartig mit diesem ohne Hilfswerkzeug kombiniert werden.

Dadurch, daß die Laubsägemaschine vom Sägetisch durch Niederdrücken einer überrastbaren Taste trennbar ist, ist das Lösen der Laubsägemaschine vom Sägetisch ohne Hilfswerkzeug besonders schnell und bequem möglich.

Dadurch, daß die Laubsägemaschine einen parallel zum Laubsägeblatt verschiebbaren Werkstückniederhalter trägt, der zugleich als Fingerabweiser dient, ist das zu bearbeitende Werkstück gegenüber der Laubsägemaschine besonders gut kontrollierbar festgelegt, so daß präzise gesägt werden kann, wobei der Bedienende vor Verletzungen am oszillierenden Sägeblatt geschützt ist.

Dadurch, daß die Arme des U-förmigen Bügels flache, freie Enden aufweisen und daran je eine Blattfeder tragen, sind die Blattfedern vollflächig aufliegend lagesicher mit dem Bügel verbunden und parallel zueinander ausgerichtet, so daß sie als Schwingen zur parallelogrammartigen Führung des Sägeblatts bzw. zum erzeugen eines leichten Pendelhubs dienen.

Dadurch, daß die Blattfedern an ihren freien Enden einen mittigen Gabelschlitz tragen, in den je ein Einspannende des Laubsägeblatts lösbar einhängbar ist, ist ein werkzeugloses formschlüssiges Spannen des Laubsägeblatts möglich, das sicherer ist als das bisher bekannte kraftschlüssige Spannen von Laubsägeblättern durch Drehen einer Flügelmutter.

Dadurch, daß die obere Blattfeder U-förmig gebogen und mit ihrem unteren Schenkel so am freien Ende des Armes des U-förmigen Profils befestigt ist, insbesondere genietet, daß die Schenkel gleichsinnig mit dem freien Arm nach außen weisen, wobei die Wölbung und der obere U-Schenkel frei schwenkbar sind, ist besonders kostengünstig eine elastisch vorgespannte Schwinge für ein parallelogrammartiges Getriebe zum oszillierenden Antrieb des Laubsägeblatts geschaffen, das allein den Aufwärtshub des Laubsägeblatts bewirkt, wobei deren Gegenschwinge die am unteren Arm befestigte Blattfeder und deren Koppel das Laubsägeblatt ist.

Dadurch, daß die untere Blattfeder, insbesondere formschlüssig, über Antriebsmittel, insbesondere über ein Pleul mit dem Motor koppelbar ist, erfolgt die Übertragung der Antriebskraft nicht unmittelbar auf das Sägeblatt, so daß die Bewegungsumkehr in den Totpunkten auf der Bewegungsbahn des Sägeblatts gedämpft ist.

Dadurch, daß die untere, in waagerechter Position entspannte Blattfeder an ihrem freien Ende eine gestanzte, nach unten gewölbte Lasche aufweist, die eine Öse zum Eingriff des Pleuls bildet ist eine besonders kostengünstige Kopplung zwischen Pleul und Blattfeder möglich.

Dadurch, daß die Blattfedern an ihren freien Enden je eine zum Schlitz quer verlaufende Rinne aufweisen in der je ein Nippel des Sägeblatts zentriert und schwenkbar gelenkig abstützbar ist, insbesondere mit seiner Schneide, ist das Laubsägeblatt verspannungsfrei gelenkig im parallelogrammartigen Getriebe mit den schwingenden Blattfedern koppelbar.

Dadurch, daß die Nippel aus angespritztem Kunststoff bestehen und einen zum Sägeblatt hinweisenden Vierkantbereich aufweisen, der spielfrei den Gabelschlitz durchgreift, sind die Einspannenden des Laubsägeblatts sicher zentriert, schwingungsgedämpft und elektrisch isoliert gegenüber den Blattfedern lagerbar.

Dadurch, daß der U-förmige Bügel aus Metall besteht, insbesondere Rohr mit kreisrundem oder ellipsenförmigem Querschnitt und daß das Basis- und Endgehäuse aus Kunststoff, insbesondere aus hälftig zusammensetzbaren Gehäuseschalen, bestehen, werden Leichtbauweise, hohe Stabilität der Widerlager des Laubsägeblatts und damit Robustheit, ergonomische Form und hohe Arbeitssicherheit bei dieser Laubsägemaschine miteinander vereint.

### Zeichnungen

Die Erfindung ist an Hand eines Ausführungsbeispiels mit zugehöriger Zeichnung näher erläutert.

Es zeigen
Figur 1 eine räumliche Ansicht der erfindungsgemäßen handgeführten Laubsägemaschine von vorn links
Figur 2 die mit einem Sägetisch verrastete Laubsägemaschine gemäß Figur 1 von vorn rechts
Figur 3 die Laubsägemaschine gem. Fig. 2 unmittelbar vor dem Verrasten des Sägetisches
Figur 4 die Laubsägemaschine von vorn
Figur 5 eine räumliche Ansicht von rechts mit demontiertem bzw. geöffnetem Endgehäuse
Figur 6 die Ansicht gem. Fig. 5 von oben mit in Löseposition geschwenktem Spannhebel
Figur 7 den U-förmigen Bügel mit den Blattfedern als Einzelheit
Figur 8 die untere Blattfeder mit eingehängtem Laubsägeblatt
Figur 9 die Unteransicht der unteren Blattfeder mit Pleul
Figur 10 das Einspannende des Laubsägeblatts,
Figur 11 die Einzelheit des Spannhebels,
Figur 12 das Sägeblatt als Einzelheit,
Figur 13 eine Schnittdarstellung des Sägetischs,
Figur 14 eine räumliche Explosionsdarstellung des Sägetischs mit dem korrespondierenden Gehäusebereich der Laubsägemaschine
Figur 15 einen Ausschnitt des Querschnitts des Basisgehäuses mit dem gekoppelten Sägetisch
Figur 16 die Innenansicht der rechten Halbschale des Basisgehäuses und
Figur 17 die linke Halbschale mit montiertem Motor und Getriebe.

### Beschreibung des Ausführungsbeispiels

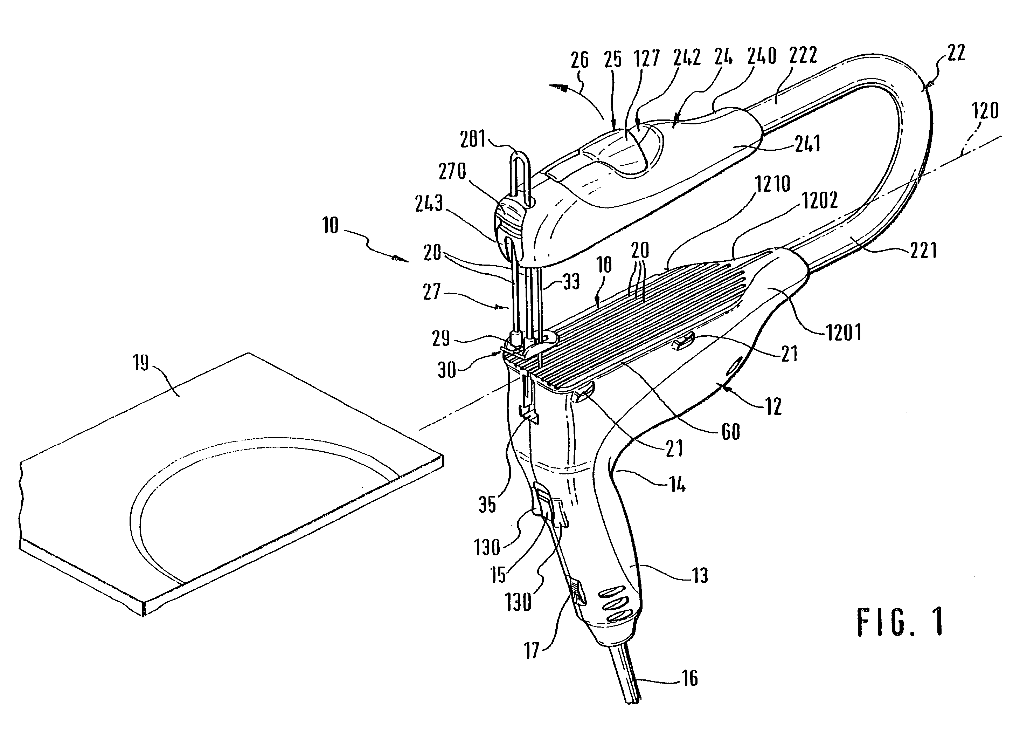

Die in Figur 1 gezeigte Laubsägemaschine 10 besteht aus einem pistolenartigen unteren Basisgehäuse 12 mit einem quer nach unten abstehenden Handgriff 13. Von seinem Austrittsbereich aus dem Basisgehäuse 12 ist der Handgriff 13 nach hinten abgewinkelt angeordnet. Die hintere Kontur des Handgriffs 13 bildet im Austrittsbereich aus dem Gehäuse 12 eine konkav gewölbte Kehle 14, die waagerecht nach hinten als untere Außenkontur des Basisgehäuses 12 weitergeführt ist. Die Kehle 14 schmiegt sich in die Bedienhand und liegt dabei etwa mittig zwischen Daumen und Zeigefinger auf dieser bzw. in diese eingespannt. Dabei stützt sich der waagerecht verlaufende hintere Bereich des Basisgehäuses 12 auf dem Handrükken und dem Unterarm des Bedienenden und bildet einen verlängerten Stützhebel, so daß dadurch die Laubsäge 10 beim Sägen besonders kontrolliert handhabbar ist.

Der Handgriff 13 trägt vorn eine von aus dem Handgriff 13 tretenden, nasenartigen Vorsprüngen 130 seitlich eng umrahmte Schalttaste 15 zum Unterbrechen bzw. Schließen des Stromkreises. Unten aus dem Handgriff 13 tritt ein Netzanschlußkabel 16 zur Energieversorgung des im Inneren des Basisgehäuses 12 angeordneten, nicht dargestellten Motors.

Unterhalb der Schalttaste 15 ist am Handgriff 13 ein Stellrad 17 einer nicht dargestellten Regelelektronik zur Drehzahleinstellung des Motors angeordnet.

Das Basisgehäuse 12 besteht aus zwei längsgeteilten Halbschalen 1201, 1202 und trägt oben eine planebene, schiffsdeckartige Auflagefläche 18 mit Längsrillen 20, auf der ein Werkstück 19 zur Bearbeitung abstützbar ist.

Das Basisgehäuse 12 trägt auf beiden Seiten unterhalb eines umlaufenden Außenrandes 68 je zwei von einander beabstandete Spannclips 21, von denen nur die beiden auf der linken Seite angeordneten erkennbar sind.

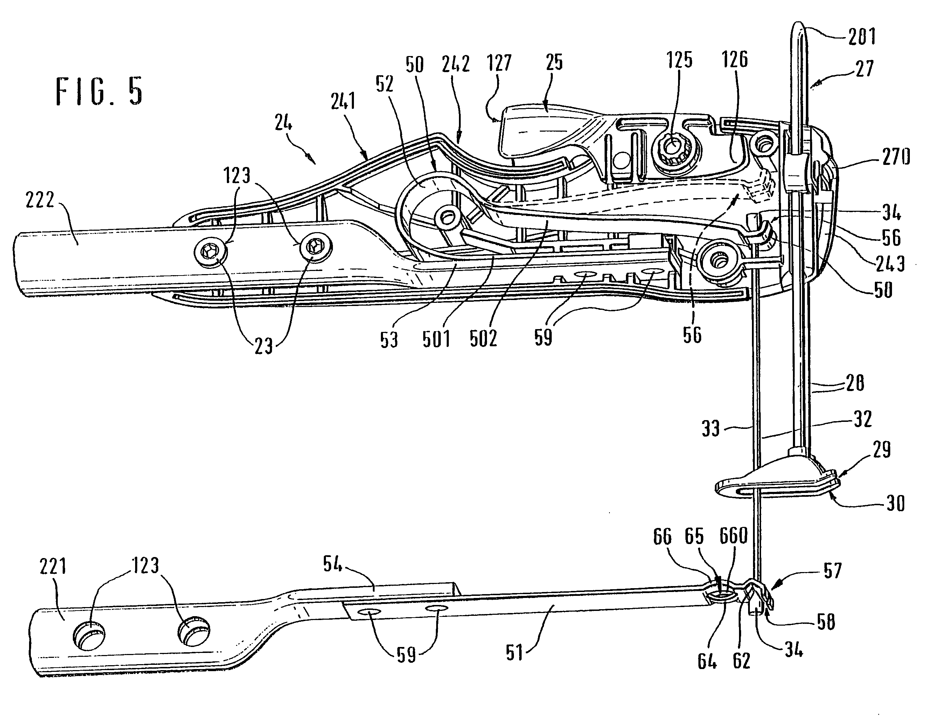

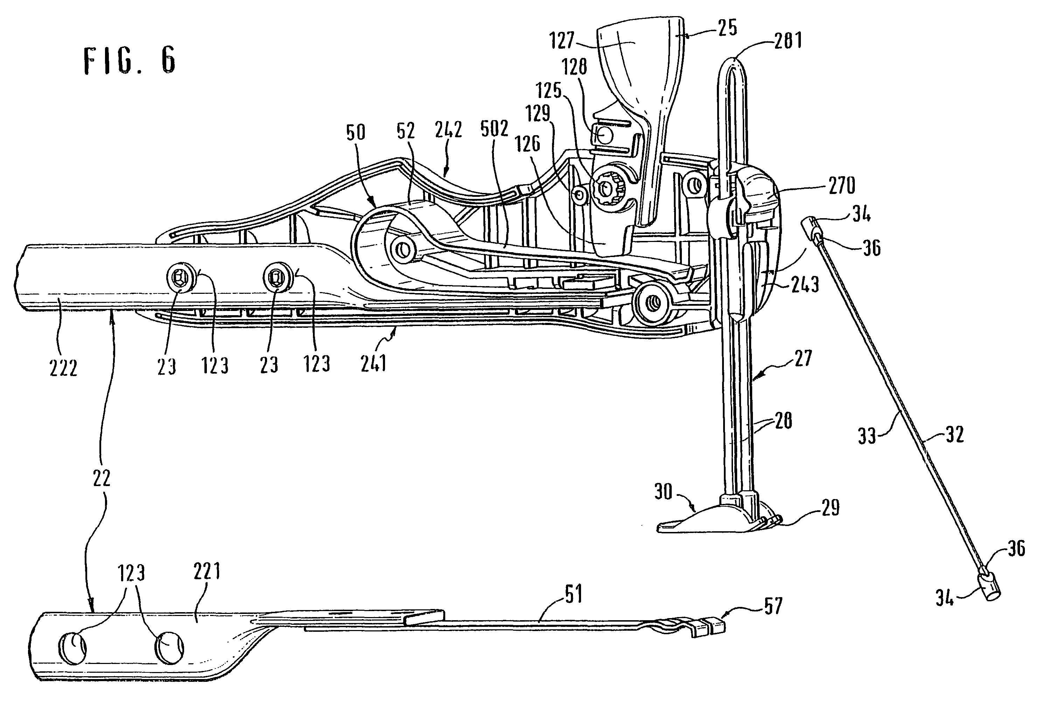

Aus dem Basisgehäuse 12 tritt nach hinten ein unterer Arm 221 eines U-förmigen Bügels 22 aus, der aus gebogenem Rohr besteht und von den Halbschalen 1201, 1202 dicht umgriffen wird. Der untere Arm 221 geht bogenförmig nach oben vorn in einen parallel zum unteren Arm 221 verlaufenden oberen Arm 222 über. Dieser obere Arm 222 trägt an seinem nach vorn gerichteten freien Ende ein Endgehäuse 24, das am Arm 222 über Befestigungsschrauben 23 (Fig. 5, 6) fixiert ist und das aus zwei längsgeteilten Gehäuseschalen 240, 241 besteht. Das Endgehäuse 24 trägt einen von oben zugänglichen Spannhebel 25, dessen Griff 127 durch eine mulden- oder kerbenartige Vertiefung 242 mit dem Finger der Bedienhand untergreifbar ist und nach oben zum Öffnen in Richtung des Betätigungspfeils 26 verschwenkbar ist.

An seinem abgerundeten Frontende trägt das Endgehäuse 24 einen Werkstückniederhalter 27, der aus zwei runden Gleitstangen 28 besteht, die im Endgehäuse 24 gegenüber dem unteren Gehäuse 12 arretierbar verschieblich gelagert sind. Die beiden Gleitstangen 28 ragen oben über das Endgehäuse 24 hinaus und sind durch einen U-förmigen Bogen 281 miteinander verbunden. Die Gleitstangen 28 tragen an ihrem unteren freien Ende, das der Auflagefläche 18 zugewandt ist, einen fußartigen Anschlag 30, der sich parallel zur Auflagefläche 18 hufeisenförmig nach hinten erstreckt mit einem nach vorn offenen Schlitz 29, in dem ein Laubsägeblatt 33, das mit seiner Zahnreihe 32 (Fig. 5, 6) nach vorn weist, seitlich und von hinten, insbesondere berührungsfrei, umgriffen bzw. geführt und gegen zu weites seitliches oder nach hinten gerichtetes Auslenken gesichert ist.

Der Werkstückniederhalter 27 ist nach Niederdrücken seiner frontal aus dem Endegehäuses ragenden Drucktaste 270 aus seiner Arretierposition nach oben verschiebbar.

Das Laubsägeblatt 33 weist zwei Einspannenden auf (Fig. 5, 6), diese angespritzte Kunstoff-Nippel 34 tragen. Diese vergrößern den Durchmesser des Sägeblatts 33 an dessen Einspannenden deutlich, so daß diese bowdenzugartig in gabelartigen Widerlagern 56, 57 einhängbar (Fig. 5, 6) und damit spannbar sind.

Das Endgehäuse 24 weist an seinem Frontbereich unterhalb der Drucktaste 270 ein schlitzartiges Montagefenster 243 auf, durch das hindurch das als Nippel 34 ausgestaltete Einspannende des Sägeblatts 33 in sein oberes Widerlager 56 einhängbar ist. Dazu korrespondierend weist das Basisgehäuse 12 einen frontalen Montageschlitz 35 auf, durch den das untere Einspannende des Laubsägeblatts 33 in Gestalt eines zweiten Nippels 34 einhängbar ist.

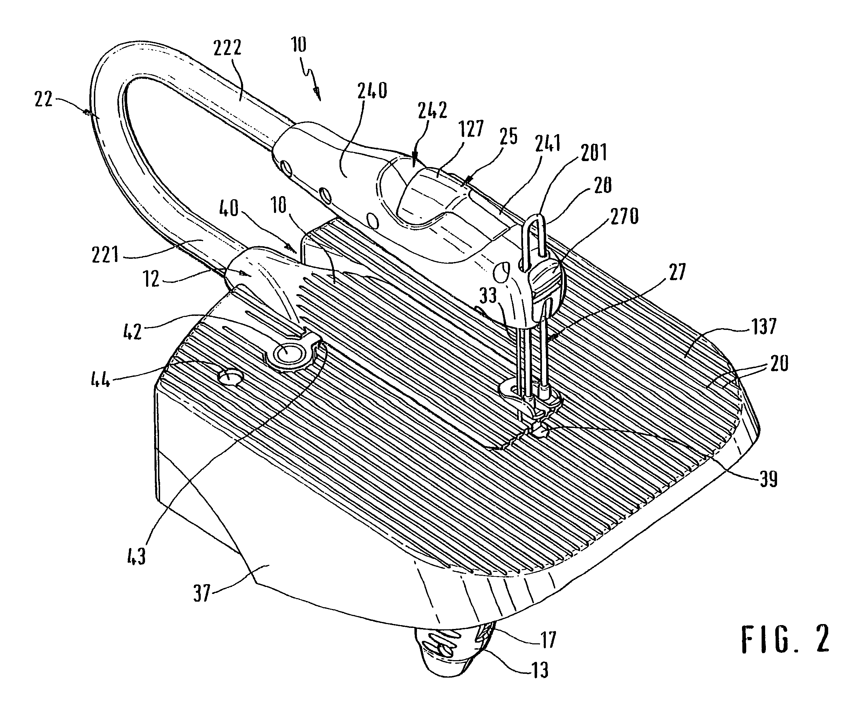

Figur 2 zeigt die Laubsägemaschine 10 von rechts oben mit einem Sägetisch 37 gekuppelt, dessen obere, planebene Auflagefläche 137 bündig in die Auflagefläche 18 des Basisgehäuses 12 übergeht, wobei die Rillen 20 der Auflageflächen 137, 18 regelmäßig ineinander übergehen.

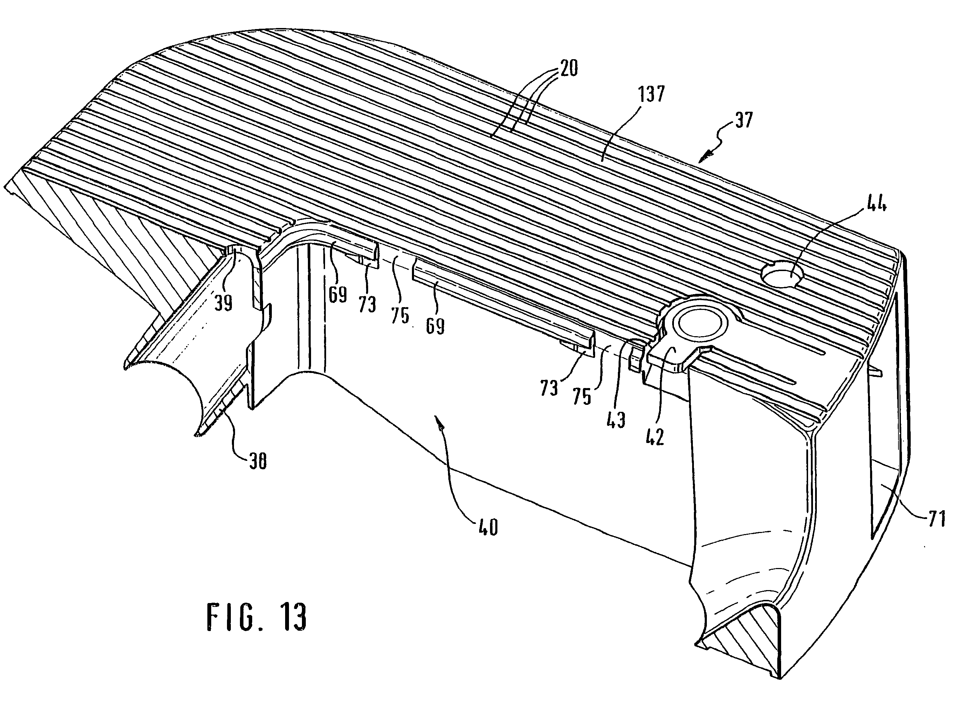

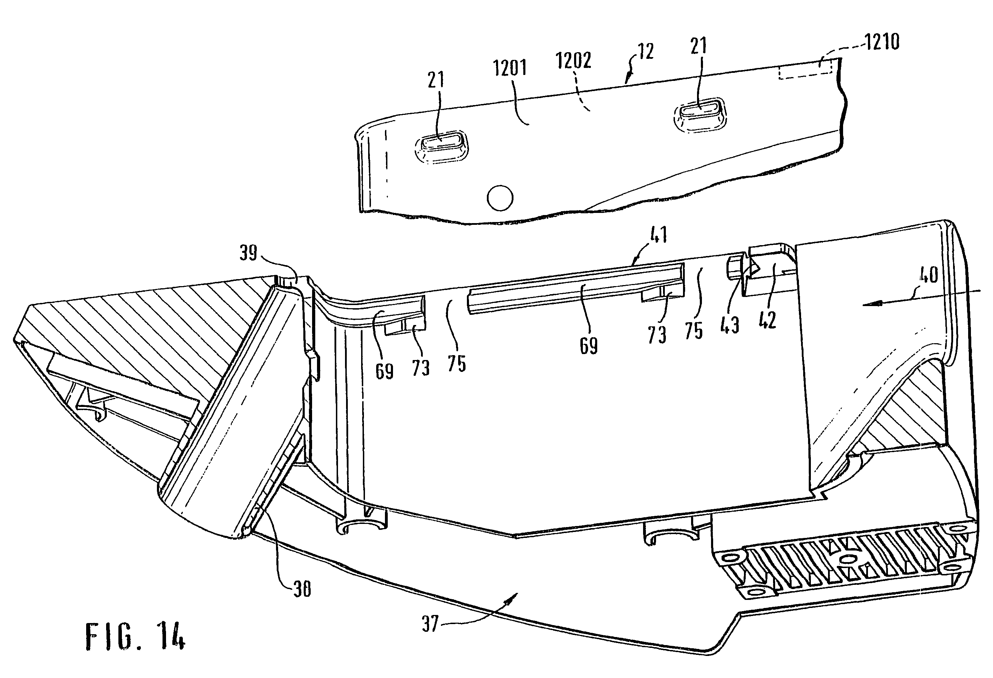

Der Sägetisch 37 weist vorn einen nach unten austretenden Absaugstutzen 38 auf (Fig. 13, 14) der oben im Bereich der Auflagefläche 137 in ein Absaugloch 39 mündet, durch das hindurch beim Sägen gebildete Sägespäne absaugbar sind, wenn an den Absaugstutzen 38 ein Saugschlauch eines Staubsaugers oder dgl. angeschlossen ist.

Der Sägetisch 37 trägt mittig in seinem hinteren Bereich eine U-förmige, in die Auflagefläche 137 hineinführende, nach unten durchgehende Ausnehmung 40, die der Außenkontur bzw. dem Außenrand 68 der Auflagefläche 18 des Basisgehäuses 12 entspricht. Die Ausnehmung 40 trägt oben auf gegenüberliegenden Seiten Längsführungen 69, 70, 73 (Fig. 13), die ein bajonettverschlußartiges Einklinken des Basisgehäuses 12 der Laubsägemaschine 10 in den Sägetisch 37 sowie dessen spielfreie Halterung darin ermöglichen.

Eine Arretiertaste 42 bildet einen Rastanschlag 43, der in eine korrespondierende Aussparung 1210 des Basisgehäuses 12 nahe der Auflagefläche 18 eingreift und das Basisgehäuse 12 und damit die Laubsägemaschine 10 gegenüber dem Sägetisch 37 lösbar festhält.

Die Auflagefläche 137 des Sägetischs 37 wird senkrecht nach unten von nach außen gleichmäßig beabstandenden Schraubenlöchern 44 durchtreten, durch die hindurch Schrauben steckbar sind, mit denen der Sägetisch 37 an einer festen Unterlage, beispielsweise Werkbank oder dgl. verschraubbar ist. Außerdem weist der Sägetisch 37 an seinem äußeren Rand hinten Klemmöffnungen 71 (Fig. 13) auf zum Eintritt einer Spannbacke einer nicht dargestellten Schraubzwinge, mit der er an einer festen Unterlage befestigbar ist.

Der Handgriff 13 ragt unterhalb des Sägetischs 37 hervor, so daß die Laubsägemaschine 10 mit gehaltertem Sägetisch 37 gemeinsam als Handwerkzeug einsetzbar ist. Damit ist die Laubsägemaschine 10 gegenüber dem Werkstück 19 besonders bequem so ausrichtbar, daß dieses rechtwinklig gegenüber dem Sägeblatt 33 bzw. der Auflagefläche 18, 137 positioniert ist.

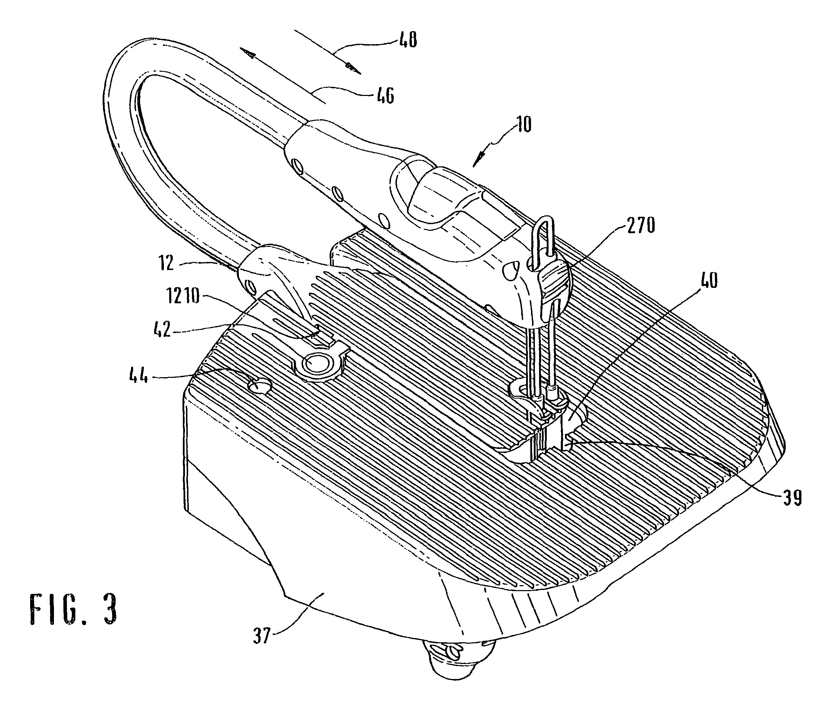

Figur 3 zeigt die Laubsägemaschine 10 beim Lösen des Sägetischs 37 bzw. kurz vor dem Einklinken in bzw. Verrasten mit diesem. Dadurch ist erkennbar, daß das Basisgehäuse 12 gegenüber dem Sägetisch 37 parallel zu dessen Auflagefläche 137 zum endgültigen Verrasten bzw. Lösen verschoben werden muß. Zuvor ist das Basisgehäuse 12 der Laubsägemaschine 10 senkrecht von oben in die Ausnehmung 40 einzusetzen, damit die Spannclips 21 sowie der Außenrand 68 des Gehäuses 12 mit den korrespondierenden Führungsfedern 69, 70, 73 des Sägetisches 37 in Eingriffsposition kommen.

Die Pfeile 46, 48 zeigen die Richtung zum Lösen bzw. Befestigen der Laubsägemaschine 10 gegenüber dem Sägetisch 37 nach dem senkrechten Einfügen des Basisgehäuses 12 in die Ausnehmung 40.

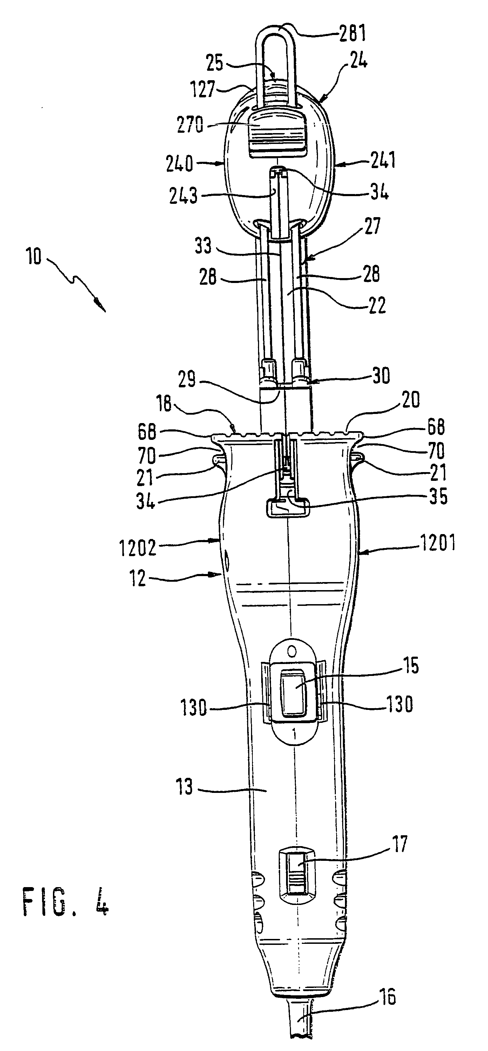

Figur 4 zeigt die Frontansicht der Laubsägemaschine 10, wobei besonders der zum Koppeln mit dem Sägetisch 37 relevante Querschnitt bzw. die Kontur des Basisgehäuses 12 mit den Spannclips 21 und dem Außenrand 68 deutlich wird. Erkennbar sind auch der Montageschlitz 35 bzw. das Montagefenster 243 und weitere bezeichnete Einzelheiten der vorherigen Figuren, ohne daß diese hier wiederholt genannt werden sollen.

Figur 5 zeigt die vorderen Bereiche des unteren und oberen Arms 221, 222 des U-förmigen Bügels 22 ohne das Basisgehäuse 12, nur mit der linken Halbschale des Endgehäuses 24 und dem Spannmechanismus zum Lösen bzw. Befestigen des Laubsägeblattes 33.

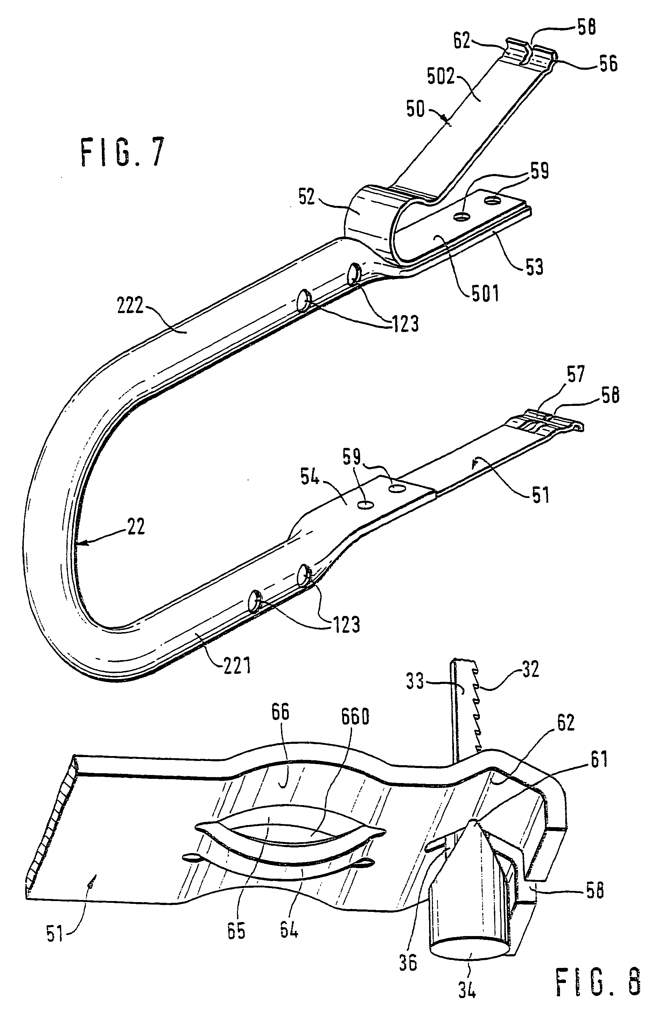

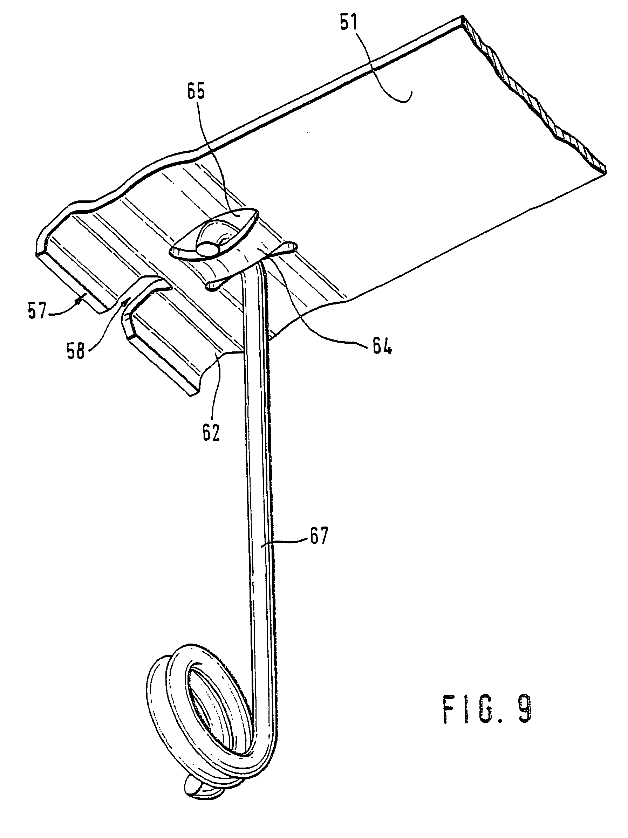

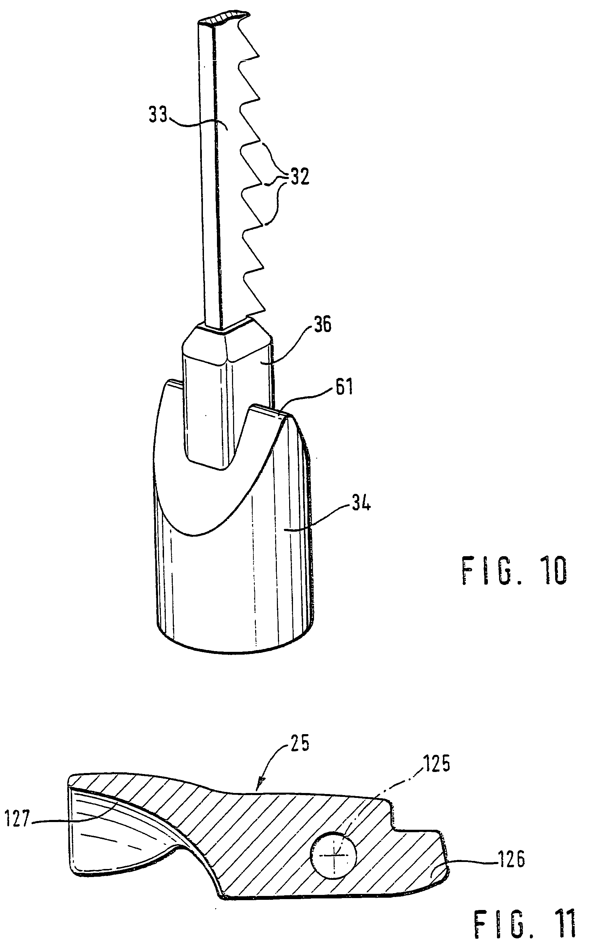

Der untere Arm 221 weist an seinem freien Ende eine waagerechte Abflachung 54 auf, an der eine ebene Blattfeder 51 an Befestigungspunkten 59 befestigt insbesondere genietet ist. Die Blattfeder 51 trägt an ihrem als Widerlager für das Sägeblatteinspannende dienenden freien Ende 57 einen mittigen Gabelschlitz 58 zum Durchtritt des Sägeblatts 33 und zum Festhalten dessen Nippels 34. Das freie Ende 57 der unteren Blattfeder 51 ist am äußersten Ende nach unten - und daran anschließend nach hinten dachartig nach oben - abgewinkelt, so daß auf der Unterseite der dachartigen Abwinklung in Querrichtung eine Rinne 62 gebildet wird, in die sich eine Schneide 61 des Nippels 34 (Fig. 8) gelenkartig pendelbar abstützt. Nach dem dachartigen Bereich setzt sich das freie Ende 57 der unteren Blattfeder 51 in einem kurzen, planebenen Bereich fort, an den sich eine nach oben gerichtete Wölbung 66 mit einem zentralen Längsschlitz 660 anschließt, der durch Stanzen bzw. Prägen einer nach unten gewölbten Lasche 64 gebildet wird. Die Wölbung 66 und die Lasche 64 bilden gemeinsam eine ovale Öse 65 zum Einhängen eines Pleuls 67 (Fig. 9), das die Drehbewegung des Motors in eine Auf- und Abbewegung der unteren Blattfeder 51 umwandelt.

Am oberen Arm 222 des Bügels 22 ist die linke Schale 241 des Endgehäuses 24 mittels Befestigungsschrauben 23 befestigt. Das freie Ende des oberen Arms 222 bildet wie das des unteren Arms 221 ebenfalls eine waagerechte Abflachung 53, an deren Oberseite an Befestigungspunkten 59 die obere Blattfeder 50 befestigt insbesondere genietet ist.
Die obere Blattfeder 50 erstreckt sich als nach rechts offenes U mit ihren Schenkeln 501, 502 nach außen - wie das freie Ende 53 des oberen Arms 222, wobei der untere, kurze Schenkel 501 am Arm 222 befestigt ist. Die Schenkel 501, 502 sind durch eine Wölbung 52 miteinander verbunden.

Das freie Ende 56 des oberen, längeren Schenkels 502 der Blattfeder 50 ist am freien Ende nach oben abgewinkelt und daran anschließend V-förmig nach unten geformt - spiegelbildlich zum äußeren Ende 57 der unteren Blattfeder 51 und bildet darin ebenfalls eine Rinne 62, die ebenso durch einen mittigen Gabelschlitz 58 über ihre Mitte hinaus durchtreten wird, so daß das Sägeblatt 33 mit seinem anderen Nippel 34 im Gabelschlitz 58 bzw. in der Rinne 62 des V-förmigen Bereichs gelenkig gelagert ist, spiegelbildlich zum unteren Einspannende 34 des Sägeblatts 33.

Die Arme 221, 222 tragen nahe ihren freien Enden Durchtrittslöcher 123, die quer zur durch den Bügel 22 aufgespannten Ebene verlaufen und dem Durchtritt der Befestigungsschrauben 23 zur Befestigung des Basis- bw. Endgehäuses 12, 24, insbesondere deren Halbschalen, dienen.

Dem oberen Schenkel 502 der oberen Blattfeder 50 ist ein als zweiarmiger Hebel ausgebildeter Spannhebel 25 zugeordnet, der um eine Schwenkachse 125 im Endgehäuse 24 mit seinem Griff 127 nach oben verschwenkbar ist, so daß sein Nocken 126 nach unten tritt und dabei den oberen Schenkel 502 der Blattfeder 50 zum unteren Arm 221 hin mitnimmt. Zum besseren Eingriff des Fingers des Bedienenden ist der Griff 127 des Spannhebels 25 ein nach hinten offener, rohrartiger Hohlkörper, in den der Bedienende mit einem Finger, geführt durch eine Vertiefung 242 in der äußeren Kontur des Endgehäuses 24, bequem eingreifen und nach oben verschwenken kann.

Figur 5 zeigt auch den vorderen Bereich des Endgehäuses 24 mit dem Werkstück-Niederhalter 27. Dessen Gleitstangen 28 tragen unterhalb des Endgehäuses 24 den fußartigen Anschlag 30 mit einem zentralen Schlitz 29. Dabei ist die hufeisenförmige Ausgestaltung des Anschlags 30 zum seitlichen und hinteren Umgreifen des Sägeblatts 33 erkennbar. Ebenso ist die Drucktaste 270 erkennbar, durch deren Niederdrücken die Arretierung des Niederhalters 27 bzw. der Gleitstangen 28 - nach oben - aufhebbar ist. Dabei ist der Niederhalter 27 durch Auf- oder Abschieben des Bogens 281 mit der Hand des Bedienenden bequem einstellbar.

Die Position des Spannhebels 25 ist in Spannposition dargestellt, wobei er in die konkave Vertiefung eintaucht und damit bündig zur Außenkontur des Endgehäuses 24 verläuft. Die obere Blattfeder 50 ist in der oberen Totpunktlage, d.h. in Spannposition, nur gestrichelt gezeichnet und in der Löseposition zum Wechseln des Sägeblatts 33 in durchgehenden Linien gezeichnet.

Die Figur 6 zeigt die gleichen Einzelheiten wie Figur 5, wobei nur der Spannhebel 25 mit seinem Griff 127 nach oben und mit seinen Nocken 126 nach unten geschwenkt den oberen Schenkel 502 der Blattfeder 50 nach unten drückt. Dabei wird deutlich die konkave Vertiefung 242 zum bündigen Eintauchen des Griffes 127 innerhalb der Außenkontur des Endgehäuses 24. Darüber hinaus ist ein zur Schwenkachse 125 benachbarter Raststift 129 der Gehäuseschale 241 gezeigt, in den eine hohlzylindrische Rastöffnung 128 des Spannhebels 25 bei Erreichen der Löseposition einrasten kann. Dabei ist das Sägeblatt 33 aus den Widerlagern bzw. den freien Enden 56, 57 der oberen und unteren Blattfedern 50, 51 gelöst und nach vorn entnommen bzw. bereit zum Wiedereinsetzen in die Widerlager. Dazu muß das Montagefenster 243 im Endgehäuse 24 bzw. das Montageschlitz 35 (Fig. 1) im Basisgehäuse 12 durchtreten werden.

Figur 7 zeigt den aus Metallrohr mit rundem Querschnitt gefertigten U-förmigen Bügel 22 mit den daran genieteten Blattfedern 50, 51, wobei das freie Ende 56 der oberen Blattfeder 50 mit dem längsverlaufenden Gabelschlitz 58 bzw. mit der Rinne 62 besonders deutlich wird, ebenso die planebene, parallele Ausrichtung der oberen und unteren Abflachungen 53, 54 des oberen und unteren Arms 221, 222, ohne daß dazu die übrigen bezeichneten - schon in den vorigen Figuren gezeigten - Einzelheiten wiederholt werden sollen.

Die geschwungene obere Blattfeder 50 und die gerade untere Blattfeder 51 sind über Hohlnieten formschlüssig auf das jeweils flache Ende 53, 54 der Arme 122, 121 mit dem U-förmigen Bügel 22 verbunden. Der Vorteil der Nietverbindung ist die Schwingungsunempfindlichkeit gegenüber den dynamischen Belastungen der Blattfedern 50, 51. Der Bügel 22 dient dabei als starres Verbindungsglied zwischen den in dem Basis- und Endgehäuse 12, 24 schwingenden Blattfedern 50, 51 und ist bei geringer Eigenmasse gegen Biegung und Torsion besonders steif.

Um die Steifigkeit des Bügel 22 in Sägeblatthubrichtung zu erhöhen, ist es von Vorteil, dessen Querschnitt oval statt rund zu wählen oder statt aus Metall aus Kohlefaserwerkstoff herzustellen.

Dadurch, daß die untere Blattfeder 51 im Bereich ihres Widerlagers 57 mehrfach gewölbt umgeformt ist, wird deren Überdehnung im Bereich der Öse 65 verhindert, an der die Antriebskraft vom Motor über das Pleuel 67 auf die Blattfeder 51 übertragen wird.

Die untere Blattfeder 51 ist in ihrer zum Arm 221 parallelen geraden Stellung neutral und besitzt über eine am freien Ende 57 gemessene Auslenkung von 4 mm einen Kraftanstieg von etwa 12 N. Die untere Blattfeder 51 dient nur dem Führen des Sägeblatts 33. Im Unterschied dazu bewirkt die obere, U-förmige Blattfeder 50 infolge ihrer nach oben gerichteten Vorspannung über den Arbeitshub des Sägeblatts 33 eine Sägeblattspannung. Dabei ist die Blattfeder 50 so ausgelegt, daß sie in der oberen Endlage bzw. im oberen Totpunkt (OT) ca. 50 N aufbringt. Diese Kraft steigt auf ca. 65 N bei einem Hub von 8 mm bis zum Erreichen des unteren Totpunktes (UT) an, so daß die Zugkraft und damit auch die Sägeblattspannung während des Arbeitshubs des Sägeblatts 33 zwischen mindestens 50 N und maximal 65 N schwankt.

Anstelle der oberen, U-förmigen Blattfeder 50 kann auch eine trapezförmige, ebene Blattfeder eingesetzt werden. Eine solche Feder gleicher Federkennlinie hat aber darüber hinaus den Vorteil größerer Seitenstabilität, d.h. ein seitliches Ausschwenken des Sägeblatts wird sicher unterbunden, weil die relativ geringe Quer-Biegesteifigkeit der Wölbung 52 der Blattfeder 50 entfällt. Außerdem wird die bewegte Masse reduziert und das Vernieten einer geraden, trapezförmigen Feder mit dem Arm 222 des Bügels 22 ist einfacher als das der u-förmigen Feder 50. Darüberhinaus ist durch die Trapezform die Biegespannungsverteilung bei der Auslenkung des Federendes beim Arbeitshub des Sägeblatts 33 gleichmäßiger.

Figur 8 zeigt in einer Vergrößerung das freie Ende 57 der unteren Blattfeder 51 mit dem Gabelschlitz 58, der Rinne 62, der Lasche 64, der Wölbung 66, der Öse 65 und dem Schlitz 660. Es ist erkennbar, daß der Nippel 34 des Laubsägeblatts 33 mit seiner Schneide 61 in der Rinne 62 pendelartig verschwenkbar gelagert ist, wobei das Laubsägeblatt 33 mit einem an die Schneide 61 anschließenden Vierkant 36 bzw. seiner Zahnreihe 32 den Gabelschlitz 58 durchtritt. Der Kunststoff-Nippel 34 wird im Gabelschlitz 58 dadurch spielfrei gelagert, daß er sich nach der Schneide 61 in Gestalt eines Vierkant 36 fortsetzt, der sich weit über die Schneide 61 hinaus erstreckt und das Sägeblatt 33 allseitig umgreift. Der Vierkant 36 dient auch der elektrischen Isolierung des Sägeblatts 33 gegenüber dem Motor bzw. dem Getriebe.

Figur 9 zeigt eine Unteransicht des freien Endes 57 der unteren Blattfeder 51, wobei der Gabelschlitz 58, die Rinne 62, die Lasche 64 sowie die Öse 65 bzw. der Längsschlitz 660 erkennbar sind, in die hakenartig ein Pleul 67 greift, das durch den nicht dargestellten Motor in eine Hin- und Her- bzw. Auf- und Abbewegung versetzt wird.

Figur 10 zeigt den Nippel 34, der sich am äußersten Ende des Laubsägeblatts 33 zylindrisch erstreckt und durch zwei dachartige Schrägen zum anderen Nippel 34 hin die Schneide 61 bildet, aus der der Vierkantbereich 36 tritt, der das Laubsägeblatt 33 spielfrei, verdrehsicher im Gabelschlitz 58 der Blattfedern 50, 51 lagert.

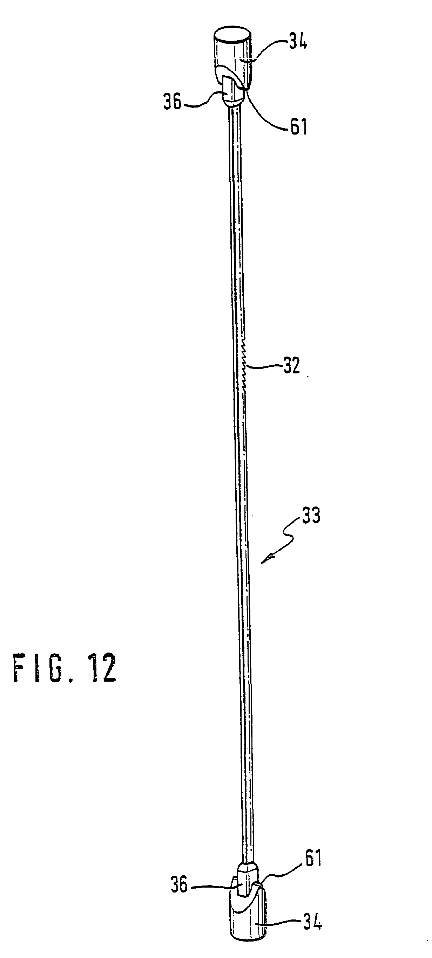

Figur 11 zeigt die Einzelheit des als zweiarmiger Hebel ausgestalteten Spannhebels 25, dessen einer Arm als hohler Griffbereich 127 und dessen anderer Arm als Nocken 126 ausgestaltet ist, zwischen denen die Drehachse 125 angeordnet ist.

Figur 12 zeigt die Einzelheit des Laubsägeblatts 33 mit den als Nippel 34 ausgestalteten Einspannenden, deren Dachschrägen, Schneiden 61 und Vierkantbereiche 36.

Figur 13 zeigt einen räumlichen Teillängsschnitt des Sägetisches 37, wobei der Absaugstutzen 38, das Absaugloch 39, die Ausnehmung 40, die Arretiertaste 42 mit dem Rastanschlag 43, das Schraubenloch 44 und die Rillen 20 erkennbar sind. Außerdem sind als Längsführung des Basisgehäuses 12 dienende Führungsfedern 69 erkennbar, mit Unterbrechungen 75 sowie seitlichen Rampen 73 sowie an der Außenseite hinten eine Eintrittsöffnung 71 für die Klemmbacke einer Schraubzwinge, zum Befestigen des Sägetisches auf einer Unterlage wie z.B. Werkbank oder dergl. Das Absaugloch 39 im Sägetisch 37 dient auch als Montageöffnung zum Sägeblattwechsel bei stationärem Betrieb der Laubsägemaschine, d.h. dazu müssen die Laubsägemaschine und der Sägetisch nicht voneinander gelöst werden.

Die Unterbrechungen 75 der Führungsfedern 69 dienen dem senkrechten Eintritt der seitlichen Spannclipse 21 des Basisgehäuses 12 der Laubsägemaschine 10 von oben in die Ausnehmung 40 zum Untergreifen der Führungsfedern 69 und zum seitlichen Abstützen an den Rampen 73.

Die Wirkungsweise des bajonettartigen Einclipssystems zwischen dem Basisgehäuse 12 und dem Sägetisch 37 ist in Fig. 14 nochmals verdeutlicht, in einem seitlichen Teilschnitt schräg von unten betrachtet. Dabei sind die Führungsfedern 69, deren Unterbrechungen 75, die keilförmig nach innen ausgebildeten Rampen 73 und die Arretiertaste 42 mit Rastanschlag 43 deutlich erkennbar. Hervorzuheben ist auch der Absaugstutzen 38, das Absaugloch 39 und die Ausnehmung 40 sowie explosionsartig - in Betrachtungsrichtung oben - der Seitenbereich des Basisgehäuses 12 mit den Spannclipsen 21 und dem oberen Außenrand 68 des Basisgehäuses 12 zum Eingriff in die Ausnehmung 40 des Sägetischs 37.

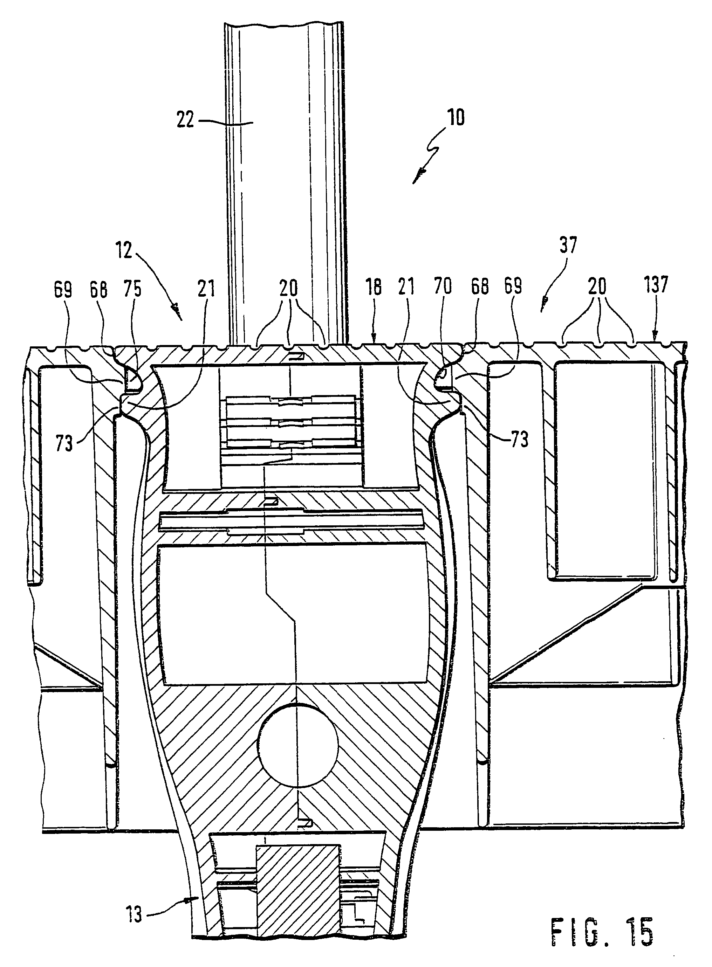

Figur 15 zeigt mit einem Querschnitt des Basisgehäuses 12 mit dem Sägetisch 37 das bajonettverschlußartige Spannsystem zwischen dem Basisgehäuse 12 und dem Sägetisch 37. Dabei ist erkennbar, wie sich die Führungsfedern 69 zwischen dem längs verlaufenden Außenrand 68 sowie den Spannclipsen 21 seitlich und vertikal abstützen und daß zwischen den Spannclipsen 21 und dem Außenrand 68 eine Führungsnut 70 zum Eintritt der Führungsfedern 69 gebildet wird.

Deutlich erkennbar sind auch die Rampen 73, die sich seitlich gegen die Spannclipse 21 stützen und für eine horizontal spielfreie Halterung des Basisgehäuses 12 am Sägetisch 37 sorgen.

Weiter sind die Rillen 20 in der Auflagefläche 18 des Gehäuses 12 und in der Auflagefläche 137 des Sägetisches 37 erkennbar und daß der Handgriff 13 unten so weit aus dem Sägetisch 37 herausragt, daß er bequem mit der Bedienhand umgreifbar ist.

Für den Stationärbetrieb wird der Sägetisch 37 zunächst an einer Werkbank befestigt. Dann wird die Laubsägemaschine 10 von oben - die Vorderseite nach vorn ausgerichtet - in dessen Ausnehmung 40 eingesetzt, bis die Auflagefläche 18 des unteren Gehäuses 12 der Laubsägemaschine 10 zur planebenen, Auflagefläche 137 des Sägetisches 37 fluchtet. Durch anschließendes Verschieben des Laubsägemaschine 10 in die Ausnehmung 40 hinein wird die Laubsägemaschine 10 gegenüber dem Sägetisch 37 bajonettverschlußartig gespannt, indem die Arretiertaste 42 mit ihrem Rastanschlag 43 in einer Aussparung 1210 des Basisgehäuse 12 verrastet und dieses - und damit die Laubsägemaschine 10 - gegen unbeabsichtigtes Lösen vom Sägetisch 37 festhält.

Die zwei Führungsfedern 69 entlang dem oberen Rand der Ausnehmung 40 haben einen keilförmigen Querschnitt. Sie werden zwischen dem oberen Außenrand 68 des Basisgehäuses 12 und den keilförmigen, nach außen verjüngend verlaufenden Spannclips 21 an den Außenseiten des Basisgehäuses 12 räumlich gespannt. Diese räumliche Spannung wird horizontal dadurch verbessert, daß die Außenseite der Spannclipse 21 sich seitlich gegenüber Schrägflächen der Rampen 73 seitlich verkeilt abstützen.

Zum Lösen der Laubsägemaschine 10 vom Sägetisch 37 muß zunächst die Arretiertaste 42 gegenüber der Oberfläche 41 nach unten gedrückt werden, damit der Rastanschlag 43 nach unten aus der Aussparung 1210 austreten kann und damit die Arretierung aufgehoben ist. Durch anschließendes horizontales Verschieben der Maschine aus der Ausnehmung 40 heraus läßt sich die Laubsägemaschine 10 nach oben vom Sägetisch 37 herausnehmen, wenn die Spannclipse 21 die Ausnehmungen 75 der Führungsfeder 69 erreicht haben.

Durch die Neigung des Handgriffs 13 gegenüber dem Gehäuse 12 um ca. 20° liegt die Maschine dem Bedienenden sicher in der Hand, wobei das Maschinengewicht vom Handrücken und Unterarm aufgenommen wird und die Bewegungsfreiheit der Laubsägemaschine bei deren Drehung und Schwenkung optimal kontrollierbar ist.

Im handgehaltenen Betrieb der mit dem Sägetisch 37 gekoppelten Laubsägemaschine 10 kann die Auflagefläche 137 des Sägetischs 37 nach oben gegen die Werkstückunterseite gedrückt werden. Da das Sägeblatt 33 auf Zug nach unten sägt, wird dabei das Werkstück 19 auf die Auflageflächen 18, 137 des Basisgehäuses 12 und des Sägetischs 37 gezogen. Dadurch ist ein vibrationfreies, ruhiges Sägen möglich.

Die die Schalttaste 15 seitlich überragenden bzw. einrahmenden Nasen 30 verhindern ein unbeabsichtigtes Einschalten der Laubsägemaschine 10 insbesondere bei deren Einsetzen in den Sägetisch 37.

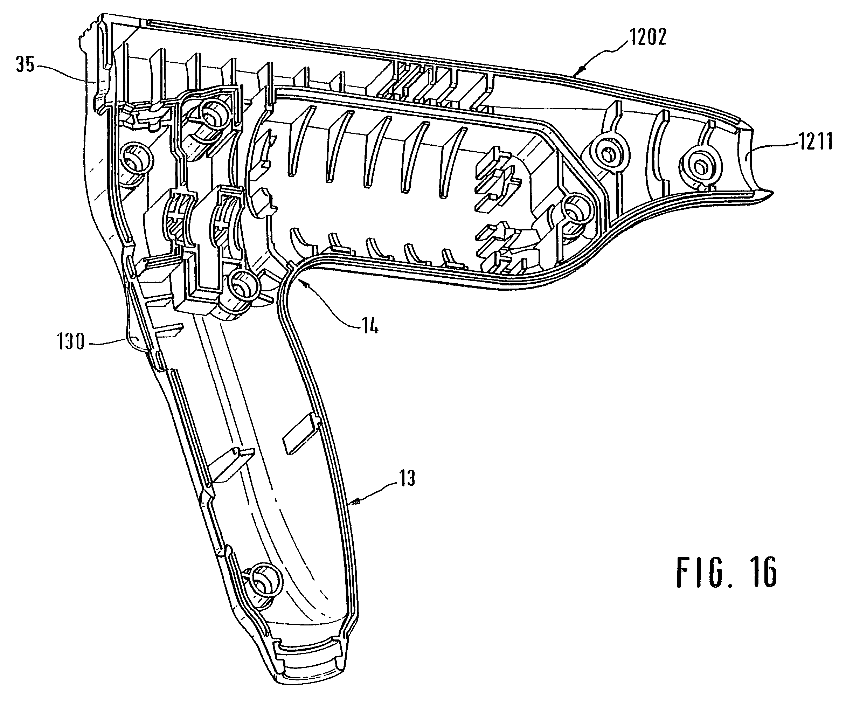

Die in Figur 16 gezeigte Innenansicht der rechten Halbschale 1202 des Basisgehäuses 12 zeigt deutlich den Handgriff 13, die Kehle 14, eine der Nasen 130, den Montageschlitz 35, die Mündung 1211 zum Durchtritt und engen, ringartigen Umgreifen des unteren Arms 221 sowie Schraubendurchtrittslöcher für die feste Koppelung des Gehäuses 12 mit dem Bügel 22.

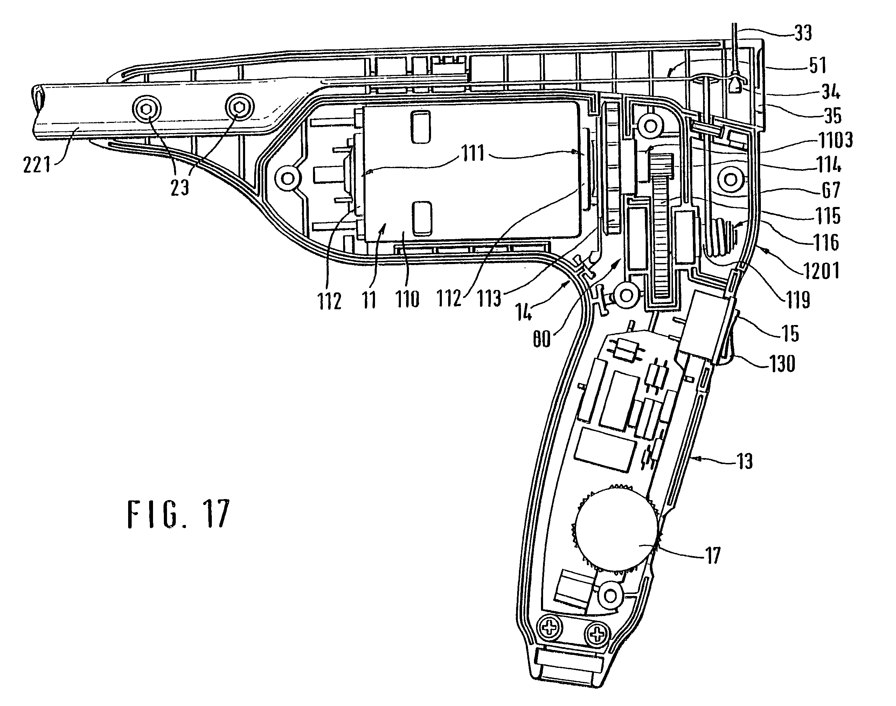

Ergänzend zu Figur 16 zeigt Figur 17 die linke Halbschale 1201 des Basisgehäuses 12 mit montiertem Motor 11 und Getriebe, wobei das Motorgehäuse 110 über Gummiringe 112 elastische Lagerpunkte 111 bildet zur schwingungsgedämpften Aufnahme des Motors 11. Eine Motorwelle 1103 trägt einen Lüfter 113 und dazu axial benachbart ein Ritzel 114, das mit einem Gegegenritzel 115 kämmt. Das Gegegenritzel 115 sitzt drehfest auf einer Kurbelwelle 116, die am freien Ende einen Kurbelzapfen 119 zum Antrieb des Pleuls 67 trägt.

## Patentansprüche

1. Handgeführte Laubsägemaschine (10) mit einem Laubsägeblatt (33), das zwischen zwei im wesentlichen parallelen, vorzugsweise aus einem U-förmigen Bügel (22), insbesondere aus Rohr, gebildeten, Armen (221, 222) an deren Enden (53, 54) lösbar gespannt ist und das über einen an die Laubsäge (10) angebauten Motor (11), insbesondere hin- und hergehend, antreibbar ist, wobei der untere Arm (221) einen Handgriff (13), vorzugsweise mit einer Schalttaste (15), trägt, **dadurch gekennzeichnet, daß** am unteren Arm (221) ein in Gestalt einer Pistole ausgestaltetes, aus Halbschalen (1201), insbesondere längs, zusammenfügbares Basisgehäuse (12) angeordnet ist, aus dem unten, insbesondere schräg nach hinten gerichtet, ein Handgriff (13) tritt, dessen hintere Außenkontur oben im Übergang zur Außenkontur des Basisgehäuses (12) eine gekrümmt abgewinkelte Kehle (14) bildet, die sich - horizontal und vertikal abstützend - in die Hand des Bedienenden schmiegt, wobei das Basisgehäuse (12) den unteren Arm (221), zumindest teilweise, umgreift.

2. Laubsäge nach Anspruch 1, **dadurch gekennzeichnet, daß** sich das Basisgehäuse (12) anschließend an die Kehle (14) weiter nach hinten erstreckt und eine Unterarmstütze für den Bedienenden bildet.

3. Laubsäge nach Anspruch 1 oder 2, **dadurch gekennzeichnet, daß** der Handgriff (13) vorn, insbesondere zwischen Nasen (130), die Schalttaste (15) trägt.

4. Laubsäge nach einem der Ansprüche 1 bis 3, **dadurch gekennzeichnet, daß** das Basisgehäuse (12) den Motor (11) und Antriebsmittel (80) zum Hin- und Herbewegen des Sägeblatts (33) aufnimmt.

5. Laubsäge nach Anspruch 1, **dadurch gekennzeichnet, daß** der obere Arm (222) an seinem freien Ende ein Endgehäuse (24) trägt, das Spannmittel (25) zum lösbaren Spannen des Laubsägeblatts (33) und Antriebsmittel (50) zu dessen Hin- und Herbewegen aufnimmt.

6. Laubsäge nach einem der vorhergehenden Ansprüche, **dadurch gekennzeichnet, daß** das Basisgehäuse (12) oben eine, insbesondere mit parallelen Rillen (20) strukturierte, vorzugsweise oberhalb des unteren Arms (221) zu diesem fluchtende, ebene Auflagefläche (18) zum Abstützen eines Werkstücks (19) trägt.

7. Laubsäge nach einem der vorhergehenden Ansprüche, **dadurch gekennzeichnet, daß** das Basisgehäuse (12), insbesondere verrastbar, lösbar mit einem, insbesondere an einer Werkbank befestigbaren, Sägetisch (37) koppelbar ist.

8. Laubsäge nach Anspruch 7, **dadurch gekennzeichnet, daß** der Sägetisch (37) mit dem Basisgehäuse (12) über gemeinsame Längsführungen, insbesondere Nut-Feder-Führungen (69, 73), spielfrei koppelbar ist.

9. Laubsäge nach einem der vorhergehenden Ansprüche, **dadurch gekennzeichnet, daß** die Laubsäge (10) einen, insbesondere parallel zum Laubsägeblatt (33), verschiebbaren Werkstück-Niederhalter (27) trägt, der zugleich als Fingerabweiser (28) dient.

10. Laubsäge nach einem der vorhergehenden Ansprüche, **dadurch gekennzeichnet, daß** die Arme (221, 222) flache, freie Enden (53, 54) aufweisen und daran, insbesondere genietet, je eine Blattfeder (50, 51) tragen.

11. Laubsäge nach Anspruch 10, **dadurch gekennzeichnet, daß** die Blattfedern (50, 51) an ihren freien Enden (56,57) je einen, vorzugsweise mittigen, Gabelschlitz (58) tragen, in den je ein Ende des Laubsägeblatts (33) lösbar einhängbar ist.

12. Laubsäge nach Anspruch 11 oder 12, **dadurch gekennzeichnet, daß** die obere Blattfeder (50) u-förmig und mit ihrem unteren Schenkel (501) so am freien Ende (53) des Arms (222) befestigt, insbesondere genietet, ist, daß die Schenkel (501, 502) gleichsinnig mit dem freien Arm (222) nach außen weisen, wobei die Wölbung (52) und der obere Schenkel (502) frei schwenkbar sind.

13. Laubsäge nach einem der Ansprüche 10 bis 12, **dadurch gekennzeichnet, daß** die untere Blattfeder (51), insbesondere formschlüssig, über Antriebsmittel, insbesondere über ein Pleul (67), mit dem Motor koppelbar ist.

14. Laubsäge nach einem der Ansprüche 10 bis 13, **dadurch gekennzeichnet, daß** die untere Blattfeder (51) an ihrem freien Ende (57) eine, insbesondere gestanzte, nach unten gewölbte Lasche (64) aufweist, die eine Öse (65) zum Eingriff eines Pleuels (67) bildet.

15. Laubsäge nach einem der Ansprüche 10 bis 14, **dadurch gekennzeichnet, daß** die Blattfedern (50, 51) an ihren freien Enden (56, 57) je eine zum Gabelschlitz (58) quer verlaufende Rinne (61) aufweisen, in der je ein Nippel (34) des Sägeblatts (33), insbesondere mit seiner Schneide (61), zentriert und schwenkbar gelenkartig abstützbar ist.

16. Laubsäge nach Anspruch 15, **dadurch gekennzeichnet, daß** die Nippel (34) aus, insbesondere angespritztem, Kunststoff bestehen und einen zum Sägeblatt (33) hinweisenden Vierkantbereich (36) aufweisen, der spielfrei den Gabelschlitz (58) durchgreift.

17. Laubsäge nach Anspruch 16, **dadurch gekennzeichnet, daß** der Bügel (22) aus Metall und das, in Halbschalenbauweise gebaute, Basis- und Endgehäuse (12, 24) aus Kunststoff, besteht.

## Claims

1. Hand-operated scroll sawing machine (10) having a scroll saw blade (33) which is releasably clamped between two essentially parallel arms (221, 222), preferably formed from a U-shaped frame (22), in particular from a tube, at their ends (53, 54) and which can be driven, in particular in a reciprocating manner, via a motor (11) attached to the scroll saw (10), the bottom arm (221) carrying a handle (13), preferably with a switch button (15), **characterized in that** a base housing (12) which is designed in the form of a pistol and can be joined together from half shells (1201), in particular longitudinally, is arranged on the bottom arm (221), from which base housing (13) a handle (13) emerges at the bottom, in particular in such a way as to be directed obliquely rearwards, the rear outer contour of which, at the top at the transition to the outer contour of the base housing (12), forms a fillet (14) which is angled in a curved manner and which nestles into the hand of the operator, in a horizontally and vertically supporting manner, the base housing (12) enclosing, at least partly, the bottom arm (221).

2. Scroll saw according to Claim 1, **characterized in that** the base housing (12), following the fillet (14), extends further to the rear and serves as a lower-arm support for the operator.

3. Scroll saw according to Claim 1 or 2, **characterized in that** the handle (13) carries the switch button (15) at the front, in particular between noses (130).

4. Scroll saw according to one of Claims 1 to 3, **characterized in that** the base housing (12) accommodates the motor (11) and drive means (80) for the reciprocating movement of the saw blade (33).

5. Scroll saw according to Claim 1, **characterized in that**, at its free end, the top arm (222) carries an end housing (24) which accommodates clamping means (25) for releasably clamping the scroll saw blade (33) and drive means (50) for moving the latter in a reciprocating manner.

6. Scroll saw according to one of the preceding claims, **characterized in that**, at the top, the base housing (12) has a flat supporting surface (18) which is structured in particular with parallel grooves (20), is preferably in alignment with the bottom arm (221) above the latter and is intended for supporting a workpiece (19).

7. Scroll saw according to one of the preceding claims, **characterized in that** the base housing (12) can be releasably coupled, in particular in a latchable manner, to a saw table (37), which in particular can be fastened to a workbench.

8. Scroll saw according to Claim 7, **characterized in that** the saw table (37) can be coupled free of play to the base housing (12) via common longitudinal guides, in particular tongue-and-groove guides (69, 73).

9. Scroll saw according to one of the preceding claims, **characterized in that** the scroll saw (10) has a workpiece hold-down device (27) which is displaceable in particular parallel to the scroll saw blade (33) and at the same time serves as a finger guard (28).

10. Scroll saw according to one of the preceding claims, **characterized in that** the arms (221, 222) have flat, free ends (53, 54) and carry a respective leaf spring (50, 51) thereon, which in particular is riveted thereon.

11. Scroll saw according to Claim 10, **characterized in that**, at their free ends (56, 57), the leaf springs (50, 51) have a, preferably central, fork slot (58), into which a respective end of the scroll saw blade (33) can be releasably fitted.

12. Scroll saw according to Claim 11 or 12, **characterized in that** the top leaf spring (50) is u-shaped and, with its bottom leg (501), is fastened, in particular riveted, to the free end (53) of the arm (222) in such a way that the legs (501, 502) point outwards in the same direction as the free arm (222), the arch (52) and the top leg (502) being freely pivotable.

13. Scroll saw according to one of Claims 10 to 12, **characterized in that** the bottom leaf spring (51) can be coupled to the motor, in particular in a positive-locking manner, via drive means, in particular via a connecting rod (67).

14. Scroll saw according to one of Claims 10 to 13, **characterized in that** the bottom leaf spring (51), at its free end (57), has an, in particular punched, strap (64) which is arched downwards and forms an eye (65) for the engagement of a connecting rod (67).

15. Scroll saw according to one of Claims 10 to 14, **characterized in that**, at their free ends (56, 57), the leaf springs (50, 51) have a respective channel (61) which runs transversely to the fork slot (58) and in which a respective nipple (34) of the saw blade (33), in particular with its knife edge (61), can be supported in a centred and pivotably articulated manner.

16. Scroll saw according to Claim 15, **characterized in that** the nipples (34) are made of plastic, in particular integrally moulded, and have a square region (36) which points towards the saw blade (33) and passes free of play through the fork slot (58).

17. Scroll saw according to Claim 16, **characterized in that** the frame (22) is made of metal and the base and end housings (12, 24) of half-shell type of construction are made of plastic.

## Revendications

1. Scie à chantourner manuelle (10) dotée d'une lame de scie à chantourner (33) tendue entre deux bras (221, 222) essentiellement parallèles formés de préférence et partir d'un étrier (22) en forme de U, notamment à partir d'un tube, la lame étant amovible aux extrémités (53, 54) ces bras et pouvant être entraînée, notamment en va-et-vient, par un moteur (11) monté sur la scie à chantourner (10), le bras inférieur (221) supportant une poignée (13), de préférence avec une touche de commutation (15),
**caractérisée en ce que**
sur le bras inférieur (221), un boîtier de base (12) en forme de pistolet peut être assemblé, notamment en longueur, à partir de demi-coques (1201), et de ce boîtier sort par le bas, notamment incliné vers l'arrière, une poignée (13) dont le contour extérieur arrière forme une moulure (14) pliée de manière incurvée en haut dans le passage vers le contour extérieur du carter de base (12), pour se conformer en s'appuyant à l'horizontale et à la verticale dans la main de l'utilisateur, le boîtier de base (12) entourant au moins partiellement le bras inférieur (221).

2. Scie à chantourner selon la revendication 1,
**caractérisée en ce que**
le boîtier de base (12) continue à s'étendre vers l'arrière en se raccordant à la moulure (14) et forme un avant-bras pour l'utilisateur.

3. Scie à chantourner selon la revendication 1 ou 2,
**caractérisée en ce que**
la poignée (13) porte à l'avant la touche de commutation (15), notamment entre des becs (130).

4. Scie à chantourner selon l'une quelconque des revendications 1 à 3,
**caractérisée en ce que**
le boîtier de base (12) loge le moteur (11) et les moyens d'entraînement (80) qui déplacent en va-et-vient la lame de scie (33).

5. Scie à chantourner selon la revendication 1,
**caractérisée en ce que**
le bras supérieur (222) supporte sur son extrémité libre un boîtier terminal (24), le moyen de tension (25) pour la tension amovible de la lame de scie (33) et le moyen d'entraînement (50) pour son déplacement en va-et-vient.

6. Scie à chantourner selon l'une quelconque des revendications précédentes,
**caractérisée en ce que**
le boîtier de base (12) supporte en haut une surface portante (18) plane, structurée notamment avec des rainures parallèles (20), de préférence au-dessus du bras inférieur (221) en étant alignée avec celui-ci, afin de soutenir une pièce (19).

7. Scie à chantourner selon l'une quelconque des revendications précédentes,
**caractérisée en ce que**
le boîtier de base (12), peut être couplé de manière amovible, en particulier par enclenchement, à une table de sciage (37) pouvant notamment être fixée à un établi.

8. Scie à chantourner selon la revendication 7,
**caractérisée en ce que**
la table de sciage (37) peut être couplée sans jeu au boîtier de base (12) via des guidages longitudinaux communs, notamment des guidages rainurés-bouvetés (69, 73).

9. Scie à chantourner selon l'une quelconque des revendications précédentes,
**caractérisée en ce que**
la scie à chantourner (10) supporte un serre-flanc de pièce (27) déplaçable, notamment parallèle à la lame de scie à chantourner (33), servant également de butoir de doigt (28).

10. Scie à chantourner selon l'une quelconque des revendications précédentes,
**caractérisée en ce que**
les bras (221, 222) présentent des extrémités (53, 54) plates libres qui supportent chacune un ressort à lames (50, 51), notamment rivé.

11. Scie à chantourner selon la revendication 10,
**caractérisée en ce que**
les ressorts à lames (50, 51) supportent sur leurs extrémités libres (56, 57) respectivement une fente en fourchette (58) de préférence centrale dans laquelle une extrémité de la lame de scie à chantourner (33) peut être accrochée à chacun d'eux de manière amovible.

12. Scie à chantourner selon la revendication 11 ou 12,
**caractérisée en ce que**
le ressort à lames supérieur (50) est en forme de U et fixé, et notamment rivé, par ses branches inférieures (501) sur l'extrémité libre (53) du bras (222) de telle manière que les branches (501, 502) sont tournées dans le même sens vers l'extérieur avec le bras libre (222), le bombement (52) et la branche supérieure (502) pouvant pivoter librement.

13. Scie à chantourner selon l'une quelconque des revendications 10 à 12,
**caractérisée en ce que**
le ressort à lames inférieur (51) peut être couplé au moteur notamment par complémentarité de forme, via des moyens d'entraînement, notamment via une bielle (67).

14. Scie à chantourner selon l'une quelconque des revendications 10 à 13,
**caractérisée en ce que**
le ressort à lames inférieur (51) présente sur son extrémité libre (57) un collier de fixation (64) bombé vers le bas, notamment estampé, qui forme un oeillet (65) permettant d'engager une bielle (67).

15. Scie à chantourner selon l'une quelconque des revendications 10 à 14,
**caractérisée en ce que**
les ressorts à lame (50, 51) présentent sur leurs extrémités libres (56, 57) respectivement une rainure (61) s'étendant à la transversale de la fente en fourchette et dans laquelle peut s'appuyer de manière articulée, centrée et pouvant pivoter un raccord fileté (34) de la lame de scie (33), notamment avec sa lame (61).

16. Scie à chantourner selon la revendication 15,
**caractérisée en ce que**
les raccords filetés (34) sont en matière plastique notamment injectée et présentent une zone carrée (36) tournée vers la lame de scie (33) et traversant sans jeu la fente de la fourchette (58).

17. Scie à chantourner selon la revendication 16,
**caractérisée en ce que**
l'étrier (22) est en métal et le boîtier de base et terminal (12, 24) monté dans un mode de construction en demi-coques est en matière plastique.
